# EUROPÄISCHE PATENTANMELDUNG

(11) **EP 0 876 038 A2**
(43) Veröffentlichungstag der Anmeldung: **04.11.1998**
(21) Anmeldenummer: 98107760.5
(22) Anmeldetag: 28.04.1998
(51) Int. Cl.: H04M 1/57

(54) **Verfahren zum Ermitteln einer einen Kommunikationsteilnehmer identifizierenden Namensbezeichnung**

(30) Priorität: 30.04.1997 DE 19718447
(71) Anmelder: SIEMENS AKTIENGESELLSCHAFT, 80333 München (DE)
(72) Erfinder: Stanzl, Gerhard, 85051 Ingolstadt (DE)

(57) **Zusammenfassung**

Zur Anzeige des Namens eines Kommunikationspartners an einem Kommunikationsendgerät wird ein vom Betreiber des den Kommunikationspartner ausweisenden Kommunikationssystems erstelltes elektronisch lesbares Rufnummernverzeichnis im Endgerät oder in dem zugehörigen Kommunikationssystem durchsucht.

## Beschreibung

Eine Übermittlung der Rufnummer des rufenden Teilnehmers an das Endgerät des gerufenen Teilnehmers ist bei privaten Kommunikationssystemen als auch auf dem Gebiet der öffentlichen Kommunikationssysteme z.B. als ISDN-Leistungsmerkmal bekannt.

Bekannte Kommunikationssysteme für den privaten Bereich unterstützen eine darüberhinausgehende gegenseitige Identifizierung von Kommunikationspartnern. In vielen Fällen wird am Endgerät des rufenden Teilnehmers nach Eingabe einer Wahlinformation, zusätzlich zu dieser der Name des Teilnehmers angezeigt, der unter dieser Rufnummer über das Kommunikationssystem zu erreichen ist. Außerdem wird am Endgerät des gerufenen Teilnehmers der Name des rufenden Teilnehmers angezeigt.

Die von privaten Kommunikationssystemen vorgenommene namentliche Identifizierung eines Kommunikationsteilnehmers erfordert gegenüber einer Identifizierung anhand einer Rufnummer keine gedankliche Assoziation und stellt damit eine erhebliche Komfortverbesserung dar, zumal eine Identifizierung anhand der Rufnummer ohnehin nur dann erfolgreich sein kann, wenn die Rufnummer als solche, als auch deren Zuordnung zum Teilnehmer bekannt ist.

Aus der "Siemens Produktschrift", "System HICOM 600", Siemens Aktiengesellschaft, 1985, Bestell-Nr. A19100-K3161-G430-01, insbesondere Seite 42 ist ein privates Kommunikationssystem mit an dieses angeschlossenen internen Kommunikationsendgeräten bekannt, bei denen eine Anzeige des Namens eines anrufenden internen Teilnehmers erfolgt. Bei einem solchen privaten Kommunikationssystem ist in einer kommunikationssysteminternen Datenbasis eine Zuordnungs- oder Übersetzungstabelle eingerichtet. In dieser Übersetzungstabelle werden mittels betriebstechnischer Anweisungen die Namen der einzelnen internen Teilnehmer und der ihnen zugeordnete Teilnehmeranschluß bzw. dessen Rufnummer eingespeichert. Ergänzungen und Änderungen in der Übersetzungstabelle sind nur mit relativ aufwendigen betriebstechnischen Eingriffen vorzunehmen, so daß aus Gründen des Aufwandes eine Einspeicherung auf die internen, d.h. die unmittelbar an das Kommunikationssystem angeschlossenen, Teilnehmerstellen beschränkt bleiben muß.

Aufgabe der vorliegenden Erfindung ist es, Voraussetzungen dafür zu schaffen, daß mit angemessenem Aufwand eine namentliche Identifizierung jedes Kommunikationspartners erfolgen kann.

Gelöst wird diese Aufgabe erfindungsgemäß durch die Merkmale der Patentansprüche 1, 2, 7 oder 8.

Das erfindungsgemäße Verfahren nach Anspruch 1 sieht eine Namensanzeige des rufenden Teilnehmers am Endgerät des gerufenen Teilnehmers vor. Im Kommunikationssystem des gerufenen Teilnehmers wird anhand eines elektronisch lesbaren, vom Betreiber des den rufenden Teilnehmer beinhaltenden Kommunikationssystems erstellten Rufnummernverzeichnisses der zur Rufnummer des rufenden Teilnehmers gehörende Name des rufenden Teilnehmers ermittelt.

Das erfindungsgemäße Verfahren nach Anspruch 2 sieht eine Namensanzeige des gerufenen Teilnehmers am Endgerät des rufenden Teilnehmers vor. Im Kommunikationssystem des rufenden Teilnehmers wird anhand eines elektronisch lesbaren, vom Betreiber des den gerufenen Teilnehmer beinhaltenden Kommunikationssystems erstellten Rufnummernverzeichnisses der zur Rufnummer des gerufenen Teilnehmers gehörende Name des gerufenen Teilnehmers ermittelt.

Das erfindungsgemäße Verfahren nach Anspruch 7 sieht eine Namensanzeige des rufenden Teilnehmers am Endgerät des gerufenen Teilnehmers vor. Anhand eines im Endgerät des gerufenen Teilnehmers gespeicherten, vom Betreiber des den rufenden Teilnehmer beinhaltenden Kommunikationssystems erstellten Rufnummernverzeichnisses wird im Endgerät der zur Rufnummer des rufenden Teilnehmers gehörende Name des rufenden Teilnehmers ermittelt.

Das erfindungsgemäße Verfahren nach Anspruch 8 sieht eine Namensanzeige des gerufenen Teilnehmers am Endgerät des rufenden Teilnehmers vor. Anhand eines im Endgerät des rufenden Teilnehmers gespeicherten, vom Betreiber des den gerufenen Teilnehmer beinhaltenden Kommunikationssystems erstellten Rufnummernverzeichnisses wird im Endgerät der zur Rufnummer des gerufenen Teilnehmers gehörende Name des gerufenen Teilnehmers ermittelt.

Vorteilhafte Weiterbildungen der Erfindung sind in den Unteransprüchen angegeben.

Zu den Varianten der Erfindung wird im folgenden jeweils ein Ausführungsbeispiel anhand der Zeichnung näher erläutert.

Dabei zeigen
- Fig 1: eine schematische Darstellung eines Kommunikationsnetzes mit zwei Kommunikationssystemen und an diese angeschlossenen Endgeräten.
- Fig 2: eine schematische Darstellung eines Kommunikationsnetzes mit an einen Netzwerkserver angeschlossenen Kommunikationssystemen.

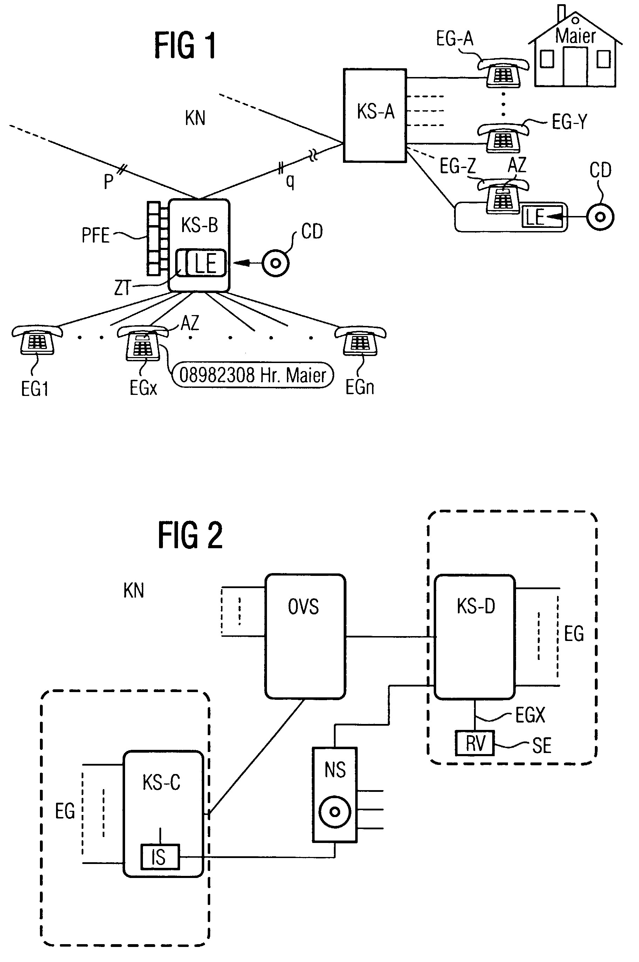

In Fig 1 sind in symbolischer Weise zwei Kommunikationssysteme KS-A, KS-B eines Kommunikationsnetzes KN dargestellt.

Das Kommunikationssystem KS-A ist als öffentliches Vermittlungssystem anzusehen, an das eine Vielzahl von Endgeräte EG-A,.., EG-Y, EG-Z im Sinne von sogenannten Hausanschlüssen angeschaltet sind. Das Kommunikationssystem KS-B ist dagegen als privates Kommunikationssystem zu verstehen, das über Verbindungsleitungen q mit dem öffentlichen Kommunikationssystem KS-A und über weitere Verbindungsleitungen p mit anderen öffentlichen oder privaten Kommunikationssystemen (nicht dargestellt) verbunden ist.

An das private Kommunikationssystem KS-B sind ebenfalls eine Vielzahl von Endgeräten EG,..., EGx,..., EGn zur Realisierung von sogenannten internen Teilnehmerstellen angeschlossen. Diese Endgeräte EG1,..., EGx,...,EGn sind mit einer mehrstelligen alphanumerischen Anzeigeeinrichtung AZ versehen.

Das private Kommunikationssystem KS-B ist mit einer Postfachspeichereinrichtung PFE ausgerüstet, in der sogenannte Postfächer für interne Teilnehmerstellen des privaten Kommunikationssystems KS-B eingerichtet sind. In ein einer Teilnehmerstelle zugeordnetes Postfach können z. B. bei Abwesenheit des die betreffende Teilnehmerstelle bedienenden internen Teilnehmers von rufenden Teilnehmern übermittelte Nachrichten eingespeichert werden. Die eingespeicherten Nachrichten lassen sich zu einem späteren Zeitpunkt von dem wieder anwesenden internen Teilnehmer - also dem Postfachinhaber - über dessen Endgerät EGx abrufen und ausgeben.

Das private Kommunikationssystem KS-B weist in einem Bereich seiner Datenbasis (nicht dargestellt) eine Zuordnungstabelle ZT auf, in der für jede interne Teilnehmerstelle die zugehörige Rufnummer und der Name des unter dieser Rufnummer zu erreichenden internen Teilnehmers gespeichert sind. Das private Kommunikationssystem KS-B weist weiterhin eine Leseeinrichtung LE auf, in die eine Compactdisc CD einfügbar ist. Auf der Compactdisc CD sind Rufnummernverzeichnisse einer Vielzahl von Ortsnetzen gespeichert, die mit Hilfe der Leseeinrichtung LE elektronisch lesbar sind. Derartige Compactdiscs sind im Handel erhältlich und beinhalten im wesentlichen die Information, die in herkömmlichen Telefonbüchern für das öffentliche Netz enthalten sind, wobei auf elektronischem Wege sowohl eine Suche nach der Rufnummer, ausgehend von dem Namen eines Teilnehmers, als auch eine Suche nach dem Namen eines Teilnehmers, ausgehend von dessen Rufnummer möglich ist.

Die beiden Kommunikationssysteme KS-A und KS-B unterstützen - z. B. im Rahmen eines ISDN-Protokolls - eine Übermittlung der dem rufenden Teilnehmer zugehörigen Rufnummer an den gerufenen Teilnehmer. Wird beispielsweise am Endgerät EG-A, das einem Teilnehmer namens 'Maier' zugeordnet ist und für das die Rufnummer '82308' innerhalb des von dem Kommunikationssystem KS-A versorgten Ortsnetzes eingerichtet ist, eine Verbindung zu dem an das private Kommunikationssystem KS-B angeschlossenen Endgerät EGx durch Eingabe von dessen Rufnummer veranlaßt, so wird, sofern das Endgerät EGx frei ist, an dieses von dem Kommunikationssystem KS-A über die Verbindungsleitungen q zum privaten Kommunikationssystem KS-B die Rufnummer '82308' des rufenden Teilnehmers übermittelt und an der Anzeigeeinrichtung AZ des Endgerätes EGx angezeigt.

Im Rahmen einer Variante der vorliegenden Erfindung wird im privaten Kommunikationssystem KS-B bei Eintreffen der vom Kommunikationssystem KS-A übermittelten Rufnummer die Leseeinrichtung LE aktiviert und in dem auf der Compactdisc CD gespeicherten Rufnummernverzeichnis des vom Kommunikationssystem KS-A versorgten Ortsnetzes - das durch eine von dem Kommunikationssystem KS-A übermittelte Ortsnetzkennzahl '089' identifiziert wird - eine Suche nach der im Rahmen des Verbindungsaufbaus übermittelten Rufnummer '82308' veranlaßt. Sobald diese Rufnummer in dem Rufnummernverzeichnis gefunden wurde, wird der Name des Teilnehmers, dem diese Rufnummer zugeordnet ist, aus dem Rufnummernverzeichnis gelesen und an die Anzeigeeinrichtung AZ des gerufenen Endgerätes EGx zur dortigen Anzeige übermittelt. Die Übermittlung der Rufnummer '82308' und des Teilnehmernamens 'Maier' erfolgt über Signalisierungsleitungen bzw. bei einer ISDN-Verbindung über den Signalisierungskanal.

Der Teilnehmer am Endgerät EGx kann sich mit Hilfe der ihm angezeigten Rufnummer- und Namensinformation sofort auf seinen Gesprächspartner einstellen und kann diesen mit Namen ansprechen. Außerdem erleichtert die Anzeige des Namens des rufenden Teilnehmers dem gerufenen Teilnehmer auch die Entscheidung darüber, ob er den Anruf annehmen oder unbeantwortet lassen will.

Bei Abwesenheit des gerufenen internen Teilnehmers erhält ein rufende Teilnehmer von der Postfacheinrichtung PFE des privaten Kommunikationssystems KS-B eine Aufforderung zur Hinterlegung einer Nachricht für den gerufenen Teilnehmer. Bei der Abspeicherung einer vom rufenden Teilnehmer übermittelten Nachricht in der Postfacheinrichtung PFE wird - zugeordnet zu dieser Nachricht - sowohl die Rufnummer als auch der mit Hilfe des auf der Compactdisc CD gespeicherten Rufnummernverzeichnisses ermittelte Namen des die Nachricht hinterlassenden Teilnehmers mit abgespeichert

Bei längerer Abwesenheit eines internen Teilnehmers - also des Postfachinhabers - kann in dessen Postfach in der Postfacheinrichtung PFE eine Vielzahl von Nachrichten rufender Teilnehmer hinterlegt worden sein. Im Rahmen einer Ausgabe der Nachrichten an den Postfachinhaber erhält dieser zu jeder gespeicherten Nachricht eine Information über die Rufnummer als auch den Namen des die betreffende Nachricht hinterlegenden Teilnehmers.

Die Anzeige des Namens des die Nachricht hinterlassenden Teilnehmers erleichtert dem Postfachinhaber bei der Abfrage der Nachrichten aus dem Postfach die Entscheidung, welche der Nachrichten vermutlich wichtiger und deshalb vorzuziehen sind, und welche der Nachrichten weniger wichtig oder eventuell bereits überholt sind und deshalb erst gar nicht mehr ausgegeben werden müssen.

Bei einer Variante der vorliegenden Erfindung kann eine Leseeinrichtung LE für die Compactdisc CD mit den Rufnummernverzeichnissen in einem Endgerät EG-Z integriert sein. Ein solches Endgerät EG-Z kann z. B. an das öffentliche Kommunikationssystem KS-A angeschlossen sein. Wird beispielsweise von einem Endgerät EG1 des privaten Kommunikationssystem KS-B eine Verbindung zu einem Hausanschluß mit dem Endgerät EG-Z veranlaßt, dann kann in dem Endgerät EG-Z anhand der im Zuge der Verbindungssignalisierung übermittelten Rufnummer des rufenden Teilnehmers eine Suche nach der übermittelten Rufnummer und dem dieser Rufnummer zugehörigen Teilnehmernamen vorgenommen werden. Endgeräte EG-Z mit integrierter Leseeinrichtung LE sind im wesentlichen zum Anschluß an ein Kommunikationssystem KS-A erforderlich, das von sich aus keine Namensanzeige unterstützt.

Nach einer weitere Variante der vorliegenden Erfindung kann die Anzeige des Namens des gerufenen Teilnehmers am Endgerät des rufenden Teilnehmers erfolgen. Wird beispielsweise am Endgerät EGx des privaten Kommunikationssystems KS-B eine Verbindung zu dem Endgerät EG-A durch Wahl der diesem Endgerät EG-A zugehörigen Rufnummer (Ortskennzahl-Anschlußnummer) veranlaßt, so wird im privaten Kommunikationssystem KS-B die Leseeinrichtung LE aktiviert und von dem auf der Compactdisc CD gespeicherten Ortsnetzverzeichnissen das zugehörige ausgewählt und in diesem nach der gewählten Anschlußnummer '82308' gesucht. Der Name des dieser Rufnummer zugeordneten Teilnehmers wird dann an der Anzeigeeinrichtung AZ des rufenden Endgerätes EGx angezeigt.

Mit der Anzeige des Namens des gerufenen Teilnehmers erhält der rufende Teilnehmer eine Bestätigung über die Richtigkeit der eingegebenen Wahlinformation. Identifiziert der angezeigte Name nicht den beabsichtigten Teilnehmer, kann der rufende Teilnehmer frühzeitig den Verbindungsaufbau abbrechen, wodurch sich unnötige Gebühren vermeiden lassen.

Eine Anzeige des Namens eines gerufenen Teilnehmers ist auch mit einem Endgerät EG-Z möglich, in dem eine Leseeinrichtung LE integriert ist. Sobald am Endgerät EG-Z die Rufnummer des gewünschten Gesprächspartners eingegeben wurde, wird die Leseeinrichtung LE aktiviert und ermittelt anhand der auf der Compactdisc CD befindlichen Rufnummernverzeichnisse den Namen des mit der eingegebenen Rufnummerninformation erreichbaren Teilnehmers. Sein Name wird an der Anzeigeeinrichtung AZ des Endgerätes EG-Z angezeigt.

In Figur 2 ist in schematisierter Form ein Kommunikationsnetz KN mit drei Kommunikationssystemen KS-C, OVS, KS-D und einem Netzwerkserver NS dargestellt. Die Kommunikationssysteme KS-C und KS-D sind als private Kommunikationssysteme mit jeweils internen Endgeräten EG anzusehen, das Kommunikationssystem OVS hingegen ist als öffentliches Kommunikationssystem zu verstehen. Die beiden privaten Kommunikationssysteme KS-D, KS-C sind jeweils über Verbindungsleitungen mit dem öffentlichen Kommunikationssystem OVS verbunden, zudem sind beide privaten Kommunikationssysteme KS-D, KS-C mit dem Netzwerkserver NS, der z. B. einen Netzwerkserver in einem Datennetz, z. B. dem "Internet", darstellt, verbunden.

Auf dem Netzwerkserver NS haben die Betreiber der beiden privaten Kommunikationssystem KS-D, KS-C jeweils ihr system-internes Rufnummernverzeichnis elektronisch lesbar hinterlegt, so daß dieses Rufnummernverzeichnis dem jeweils anderen Kommunikationssystem bzw. dessen Betreiber zur Verfügung steht. Auf diese Weise kann eine namentliche Anzeige des Kommunikationspartners, wie im Zusammenhang mit Fig 1 erläutert, auch bei nicht vorhandener Leseeinrichtung LE und zugehörigem Speichermedium erfolgen. Ein Austausch der Rufnummernverzeichnisse über das "Internet" bietet sich z. B. für Firmen an, die eine enge Zusammenarbeit pflegen und deren Mitarbeiter häufig mit den Mitarbeitern der anderen Firma kommunizieren. Ein Übermitteln eines das Rufnummernverzeichnisses beinhaltenden Festwertspeichers z. B. in der Form einer Compactdisc wäre in derartigen Fällen relativ aufwendig. Ein Zurverfügungstellen des Rufnummernverzeichnis über ein Datennetz bringt außerdem den Vorteil, daß stets eine aktualisierte Version des Rufnummernverzeichnisses anbietbar bzw. verfügbar ist. Das Rufnummernverzeichnis wird z. B. einmal in der Woche aus dem Netzwerkserver NS gelesen und in einen kommunikationssystem-internen Speicher IS, der z. B. als flüchtiger und damit kostengünstiger Schreib-Lesespeicher ausgeführt sein kann, eingespeichert. Selbstverständlich können auch die Rufnummernverzeichnisse von mehreren Firmen in den kommunikationssystem-internen Speicher IS geladen werden, und zusätzlich eine Leseeinrichtung LE für eine Compactdisc CD vorgesehen werden, auf der die Rufnummernverzeichnisse des öffentlichen Netzes gespeichert sind.

Eine Alternative zur Ermittlung des Rufnummernverzeichnisses eines privaten Kommunikationssystems für eine namentliche Anzeige des rufenden oder gerufenen Teilnehmers besteht darin, daß ein Teilnehmeranschluß EGx des privaten Kommunikationssystems KS-D an eine Speichereinrichtung SE angeschlossen ist, in der das systeminterne Rufnummernverzeichnis RV des eigenen Kommunikationssystems KS-D gespeichert ist und von der das Rufnummernverzeichnis RV über das Kommunikationsnetz KN zu einem Empfänger übermittelt werden kann. Soll im privaten Kommunikationssystem KS-C eine namentliche Anzeige von Kommunikationsteilnehmern des privaten Kommunikationssystems KS-D unterstützt werden, wird vom privaten Kommunikationssystem KS-C z. B. in regelmäßigen Abständen eine Verbindung zu dem Teilnehmeranschluß EGx des privaten Kommunikationssystems KS-D veranlaßt und von der an dieser angeschlossenen Speichereinrichtung SE das Rufnummernverzeichnis RV in den kommunikationssystem-internen Speicher IS des privaten Kommunikationssystems KS-C übertragen.

Selbstverständlich lassen sich auch Mischformen unter den vorstehend angesprochenen Varianten und Ausführungsformen der vorliegenden Erfindung bilden.

## Patentansprüche

1. Verfahren in einem Kommunikationsnetz mit wenigstens zwei jeweils eine Vielzahl von Teilnehmeranschlüssen aufweisenden Kommunikationssystemen, zum Ermitteln einer einen rufenden Teilnehmer identifizierenden Namensbezeichnung für eine Anzeige derselben an einem Endgeräte eines gerufenen Teilnehmers, wobei im Rahmen einer Verbindungssignalisierung eine den Teilnehmeranschluß des rufenden Teilnehmers identifizierende Rufnummerninformation vom Kommunikationssystem des rufenden an das Kommunikationssystem des gerufenen Teilnehmers übermittelt wird,
und vom Kommunikationssystem des gerufenen Teilnehmers ein in einer Rufnummerndatei gespeichertes, vom Betreiber des Kommunikationssystems des rufenden Teilnehmers erstelltes Rufnummernverzeichnis auf Vorhandensein der übermittelten Rufnummerninformation durchsucht wird,
und bei Auffinden der Rufnummerninformation eine dieser im Rufnummernverzeichnis zugeordnete Namensbezeichnung ermittelt und am Endgerät des gerufenen Teilnehmers angezeigt wird.

2. Verfahren in einem Kommunikationsnetz mit wenigstens zwei jeweils eine Vielzahl von Teilnehmeranschlüssen aufweisenden Kommunikationssystemen, zum Ermitteln einer einen gerufenen Teilnehmer identifizierenden Namensbezeichnung für eine Anzeige derselben an einem Endgeräte eines rufenden Teilnehmers, wobei vom Kommunikationssystem des rufenden Teilnehmers ein in einer Rufnummerndatei gespeichertes, vom Betreiber des Kommunikationssystems des gerufenen Teilnehmers erstelltes Rufnummernverzeichnis auf Vorhandensein einer im Zuge eines Wahlvorganges eingegebenen Rufnummerninformation durchsucht wird,
und bei Auffinden der Rufnummerninformation eine dieser im Rufnummernverzeichnis zugeordnete Namensbezeichnung ermittelt und am Endgerät des rufenden Teilnehmers angezeigt wird.

3. Verfahren nach Anspruch 1 oder 2,
**dadurch gekennzeichnet**,
daß eine auf einem transportablen Speichermedium (CD) hinterlegte Rufnummerndatei durch Einfügen des transportablen Speichermediums (CD) in eine an das Kommunikationssystem des gerufenen bzw. rufenden Teilnehmers angeschlossene Speicherleseeinrichtung gespeichert wird.

4. Verfahren nach Anspruch 1 oder 2,
**dadurch gekennzeichnet**,
daß die Rufnummerndatei über eine Datenübertragungsleitung in das Kommunikationssystem des gerufenen bzw. rufenden Teilnehmers übertragen und in einem Schreib-Lesespeicher gespeichert wird.

5. Verfahren nach Anspruch 4,
**dadurch gekennzeichnet**,
daß vom Kommunikationssystem des gerufenen bzw. rufenden Teilnehmers eine Übertragung der Rufnummerndatei dadurch veranlaßt wird, daß eine zur Übertragung der Rufnummerndatei reservierte Teilnehmerstelle gerufen wird.

6. Verfahren nach Anspruch 4,
**dadurch gekennzeichnet**,
daß von dem Kommunikationssystem eine Übertragung der Rufnummerndatei dadurch veranlaßt wird, daß eine auf einem Datennetz (Internet) zur Verfügung gestellte Rufnummerndatei adressiert wird.

7. Verfahren in einem Kommunikationsnetz mit wenigstens zwei jeweils eine Vielzahl von Teilnehmeranschlüssen aufweisenden Kommunikationssystemen, zum Ermitteln einer einen rufenden Teilnehmer identifizierenden Namensbezeichnung für eine Anzeige derselben an einem Endgeräte eines gerufenen Teilnehmers, wobei im Rahmen einer Verbindungssignalisierung eine den Teilnehmeranschluß des rufenden Teilnehmers identifizierende Rufnummerninformation vom Kommunikationssystem des rufenden über das Kommunikationssystem des gerufenen Teilnehmers an dessen Endgerät übermittelt wird,
von dem ein in einer Rufnummerndatei gespeichertes, vom Betreiber des Kommunikationssystems des rufenden Teilnehmers erstelltes Rufnummernverzeichnis auf Vorhandensein der übermittelten Rufnummerninformation durchsucht wird,
und bei Auffinden der Rufnummerninformation eine dieser im Rufnummernverzeichnis zugeordnete Namensbezeichnung ermittelt und angezeigt wird.

8. Verfahren in einem Kommunikationsnetz mit wenigstens zwei jeweils eine Vielzahl von Teilnehmeranschlüssen aufweisenden Kommunikationssystemen, zum Ermitteln einer einen gerufenen Teilnehmer identifizierenden Namensbezeichnung für eine Anzeige derselben an einem Endgeräte eines rufenden Teilnehmers, wobei von diesem Endgerät ein in einer Rufnummerndatei gespeichertes, vom Betreiber des Kommunikationssystems des gerufenen Teilnehmers erstelltes Rufnummernverzeichnis auf Vorhandensein einer im Zuge eines Wahlvorganges eingegebenen Rufnummerninformation durchsucht wird,
und bei Auffinden der Rufnummerninformation eine dieser im Rufnummernverzeichnis zugeordnete Namensbezeichnung ermittelt und angezeigt wird.

9. Verfahren nach Anspruch 7 oder 8,
**dadurch gekennzeichnet**,
daß eine auf einem tranportablen Speichermedium (CD) hinterlegte Rufnummerndatei durch Einfügen des transportablen Speichermediums (CD) in eine an das Endgerät des gerufenen bzw. rufenden Teilnehmers angeschlossene Speicherleseeinrichtung gespeichert wird.

10. Verfahren nach Anspruch 7 oder 8,
**dadurch gekennzeichnet**,
daß die Rufnummerndatei über eine Datenübertragungsleitung in das Endgerät übertragen und in einem Schreib-Lesespeicher gespeichert wird.

11. Verfahren nach Anspruch 10,
**dadurch gekennzeichnet**,
daß vom Endgerät des gerufenen bzw. rufenden Teilnehmers eine Übertragung der Rufnummerndatei dadurch veranlaßt wird, daß eine auf einem Datennetz (Internet) zur Verfügung gestellte Rufnummerndatei adressiert wird.

12. Verfahren nach Anspruch 3 oder 9,
**dadurch gekennzeichnet**,
daß das transportable Speichermedium (CD) eine das Rufnummernverzeichnis der Teilnehmer wenigstens eines Ortsnetzes aufweisende Kompaktdisk ist.

13. Verfahren nach Anspruch 3 oder 9,
**dadurch gekennzeichnet**,
daß die Rufnummerndatei das Rufnummernverzeichnis von internen Teilnehmern eines privaten Kommunikationssystems beinhaltet.

14. Verfahren nach einem der vorhergehenden Ansprüche
**dadurch gekennzeichnet**,
daß für eine Ausgabe von in einer einem gerufenen Teilnehmer zugeordneten Postfacheinrichtung gespeicherten, von rufenden Teilnehmern eingegebenen Sprachnachrichten die Namensbezeichnungen dieser rufenden Teilnehmer ermittelt und am Endgerät des gerufenen Teilnehmers angezeigt wird und daß die Ausgabe einer gespeicherten Sprachnachricht durch Selektierung der den ihre Einspeicherung veranlassend rufenden Teilnehmer identifizierenden Namensbezeichnung veranlaßt wird.
